# EUROPEAN PATENT APPLICATION

(11) **EP 1 944 233 A1**
(43) Date of publication of application: **16.07.2008**
(21) Application number: 07425542.3
(22) Date of filing: 30.08.2007
(51) Int. Cl.: B64C 25/40

(54) **Passive acceleration device for aircraft wheels**

(30) Priority: 01.09.2006 IT RM20060466
(71) Applicant: Cassetta, Franco Giuseppe, 00198 Rome (IT); Perez, Leticia Claudia, 00198 Rome (IT)
(72) Inventor: Cassetta, Franco Guiseppe, 00198 Roma (IT); Perez, Leticia Claudia, 00198 Roma (IT)

(57) **Abstract**

The present invention concern in a device whose aim is to ensure a higher safety during landing of any type of aircraft.

The device is made up of a hubcap with fixed a special tabs fitted on special crevices that are cut on the hubcap, and will force the wheel to spin due to the friction between them and air.

**Safety**

In case of rain, minimize the aquaplaning effects and reduce the landing-shock (abnormal abrasion in the touch moment)

**Minor wear**

By achieving better landing conditions for tyres, a 50% or more minor tread consumption is expectable.

## Description

The present invention concern in a device whose aim is to ensure a higher safety during landing of any type of aircraft.

The principle is to fixed a hubcap on the wheel, with insert a series of tabs so that they will force the wheel to start spinning before the aircraft touches the ground.

The device is made up of a hubcap that has to be fixed on every wheel. The tabs are fitted on special crevices that are cut on the hubcap, and will force the wheel to spin due to the friction between them and air.

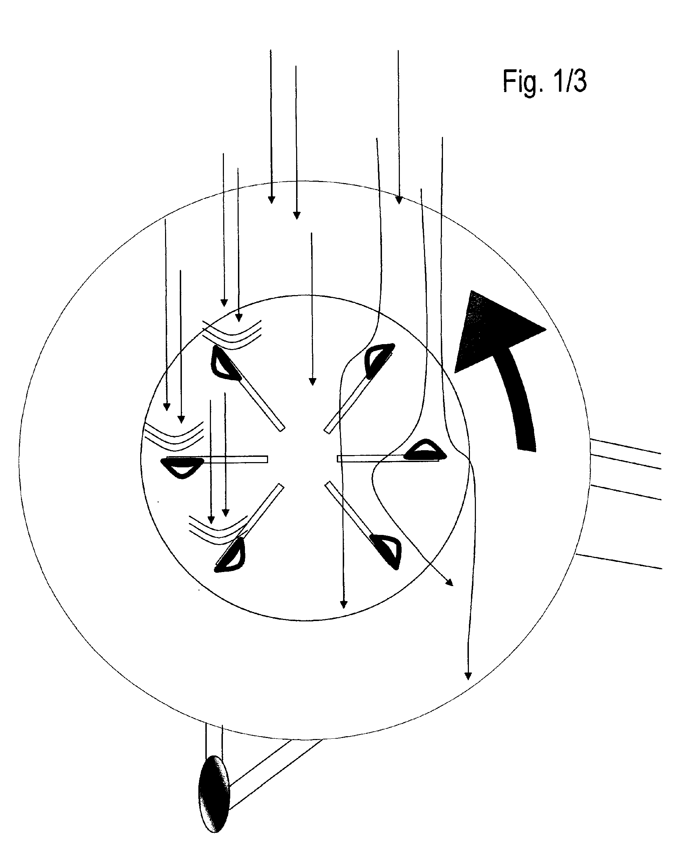

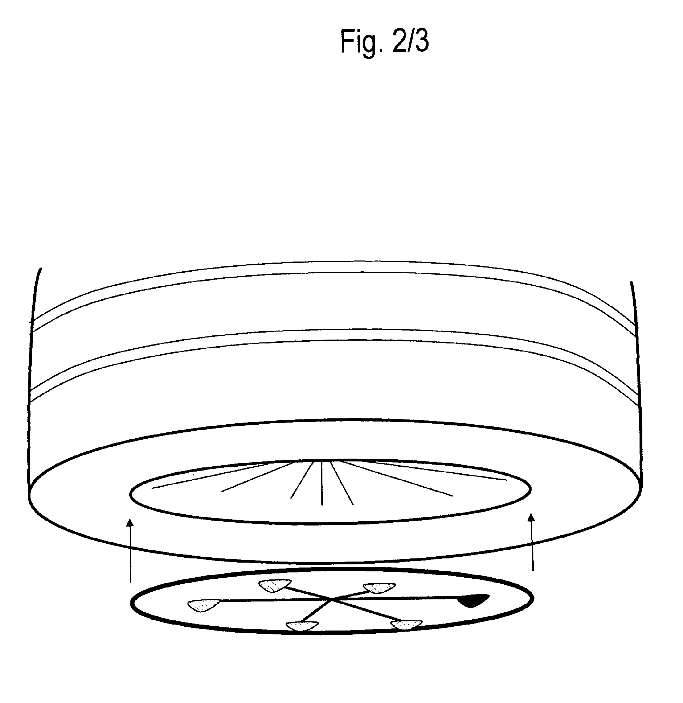

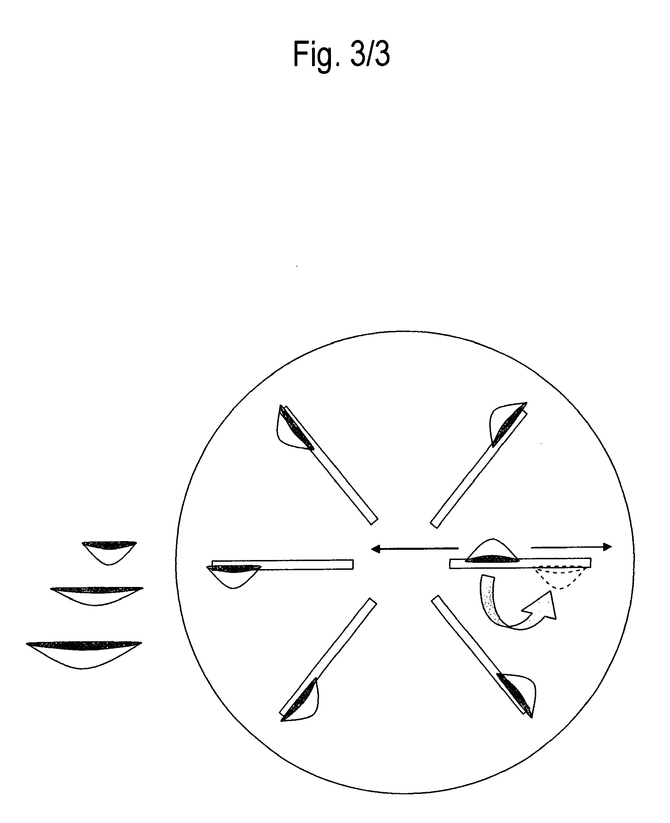

The hubcap will have the following features:
o It will be made in several sizes so that it will fit every rim that is on the market.
o The tabs will be designed in several shapes and dimensions for different air friction
o The fitting mechanics between tabs and hubcap will be designed to ensure the maximum ease of assembling and disassembling.
o The crevices on the hubcap will allow to adjust the distance of the tabs from the wheel axis (fig. 3)
o The modular assembling of the device will make it side independent (it will be possible to fix it either on the left or on the right side of the wheels) (fig. 3)
o The hubcap fastening system will be designed specifically for every rim
o The present invention will allow the ensure a higher safety in aircraft landing and minimizing tyre wear.

### Safety - rain

In case of rain, landing is unsafe because of the possibility of hydroplaning due to the fact that the wheels stay still until the very moment they touch the ground.
The spinning wheel reduces the risk of hydroplaning to a minimum, consequently enabling higher safety, by helping break the intermolecular cohesion between water and tyre.

### Safety - Landing shock

When the wheels touch the ground, a variation of angular velocity from a very high value is achieved in a fraction of a second.
In this moment tyres suffer the highest stress due to the sudden acceleration, leading to an abnormal tyre abrasion, very rapid increase in temperature (we shall note that tyres stay at a very low temperature of -40° to -50° C during the flight) and to a violent sudden compression due to the aircraft great mass.

A spinning wheel would help fighting all of the above shocks. The abrasion would be minimized due to the already rotating wheel. The tyre temperature would start rising right after landing gear deployment, due to increased air friction that comes along with rotation.
There only remains the sudden tyres compression, but as far as better tyre conditions are achieved during landing, this shock should be easily tolerated.

### Minor wear

By achieving better landing conditions for tyres, a 50% or more minor tread consumption is expectable.

The present invention is described and illustrated in its immediate production form. As clearly understandable, any expert technician could modify and refine this project, although staying within bounds of the present industrial patent.

## Claims

1. PASSIVE ACCELERATION DEVICE FOR AIRCRAFT WHEELS, is based on the idea of taking advantage of a physical factor, air friction, to start a rotational movement of aircraft wheels before landing, to minimize the mechanical and heat shock suffered by aircraft tyres during landing.

2. DEVICE as of the previous statement, set up by a hubcap with crevices, wherein tabs are bolt fixed.

3. DEVICE as of the previous statement, **characterized by** adjustable tabs in order to control the spinning speed of the wheel.

4. DEVICE as of the previous statement, **characterized by** different sized tabs in order to fit different aircraft wheel rims.

5. DEVICE as of the previous statement, **characterized** of the permanent progressive serial numbers.

6. PASSIVE ACCELERATION DEVICE FOR AIRCRAFT WHEELS as described and illustrated in the attached pictures. (fig. 1,2,3)
